# EUROPEAN PATENT SPECIFICATION

(11) **EP 2 877 669 B1**
(45) Date of publication and mention of the grant of the patent: **03.07.2019**
(21) Application number: 12886068.1
(22) Date of filing: 01.10.2012
(51) Int. Cl.: E21B 33/10, F16J 15/18

(54) **WELL TOOLS HAVING ENERGIZED SEALS**
BOHRLOCHWERKZEUGE MIT VORGESPANNTEN DICHTUNGEN
OUTILS DE PUITS COMPORTANT DES JOINTS D'ÉTANCHÉITÉ ACTIVÉS

(43) Date of publication of application: 03.06.2015
(73) Proprietor: Halliburton Energy Services, Inc., Houston, TX 77072 (US)
(72) Inventor: SHERRILL, Kristopher, V., Thousand Oaks, CA 91362 (US)
(74) Representative: Hoffmann Eitle
(86) International application number: PCT/US2012/058336
(87) International publication number: WO 2014/055062

(56) References cited:
- GB-A- 2 166 814
- US-A- 4 127 168
- US-A- 4 160 551
- US-A- 4 333 542
- US-A- 4 548 265
- US-A1- 2002 179 304
- US-A1- 2005 279 494
- US-A1- 2010 148 447
- US-A1- 2011 174 506

## Description

This disclosure relates generally to sealing systems for sealing against fluid pressure and, in one example described below, more particularly provides a well tool having an energized seal.

Seals in well tools typically must withstand relatively large differential pressures at relatively high temperatures. Even if a differential pressure against which a particular seal seals would not be considered a "high" differential pressure, if the seal has been exposed to relatively high temperatures, the seal can take a "set" (e.g., become deformed and lose its resilience), and become unable to seal against relatively low differential pressures.

It will, therefore, be readily appreciated that improvements are continually needed in the art of constructing seals.

United States patent application publication no. US 2002/0179304 A1 describes a downhole fluid disposal apparatus, but does not disclose the provision of elastomeric seals interposed between anti-extrusion rings to prevent compressed resilient from disengagement in the event of the seals losing any measure of their resilience.

United States patent publication no. US 4,160,551 describes a seal assembly including alternate, generally "V"-shaped layers of graphite and spring metal nested within one another, but does not disclose the use of resilient elastomeric seals.

In one aspect, the invention provides a sealing method comprising: installing a plurality of resilient annular seals, made of an elastomeric material, between outer and inner seal surfaces in a well tool, wherein each one of the seals is interposed between, and is in direct contact with each ring of a pair of anti-extrusion rings, the seals being compressed radially between the outer and inner seal surfaces as a result of the installing; and at least one spring external to the seals exerting a longitudinal compressive force on the seals to radially extend the seals into sealing engagement with the surfaces.

In another aspect, the invention provides a well tool comprising: a plurality of radially compressed resilient annular seals, made of an elastomeric material, installed between outer and inner seal surfaces of the well tool, which compression is due to the seals, when initially installed, being dimensioned to have a greater radial dimension as compared to a radial distance between the outer and inner seal surfaces, such that the installed seals are radially compressed between the outer and inner seal surfaces, each one of the seals being interposed between, and in direct contact with each ring of a pair of anti-extrusion rings; and at least one spring configured to exert a longitudinal compressive force on the seals to expand the seals radially, the spring being external to the seal.

In order that the invention will be more readily understood, embodiments thereof will now be described, by way of example only, with reference to the drawings, and in which:
FIG. 1 is a representative partially cross-sectional view of a system and associated method, according to embodiments of the invention;
FIG. 2 is a representative cross-sectional view of a well tool which may be used in the system and method of FIG. 1, according to embodiments of the invention; and
FIG. 3 is a representative cross-sectional view of a sealing system which may be used in the well tool of FIG. 2, according to embodiments of the invention.

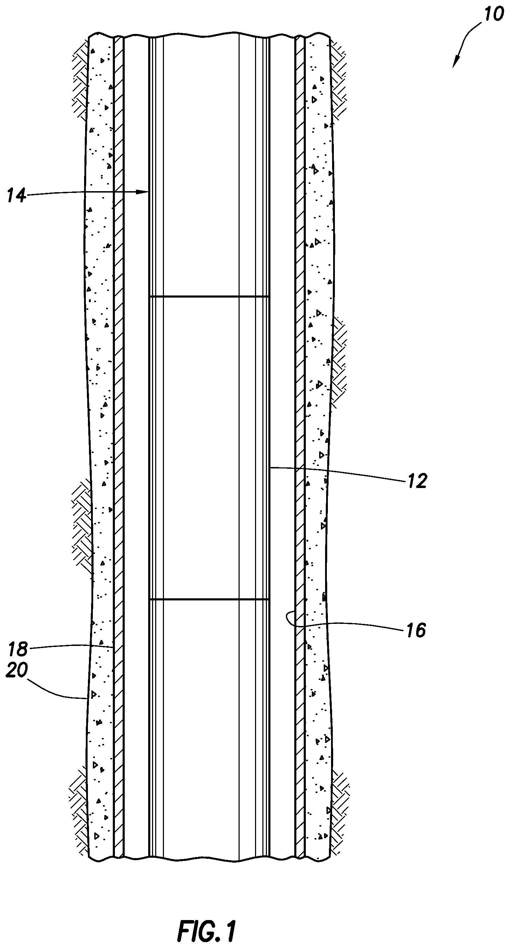

Representatively illustrated in FIG. 1 is a system 10 and associated method which can embody principles of this disclosure. However, it should be clearly understood that the system 10 and method are merely one example of an application of the principles of this disclosure in practice, and a wide variety of other examples are possible. Therefore, the scope of this disclosure is not limited at all to the details of the system 10 and method described herein and/or depicted in the drawings.

In the FIG. 1 example, a well tool 12 is connected in a tubular string 14 installed in a wellbore 16. The well tool 12 may be any type of well tool, for example, a packer, a production or stimulation valve, a choke, a pump, etc. In other examples, the well tool 12 could be a drilling tool, wireline tool, stimulation tool, gravel packing tool, or any other type of well tool. The scope of this disclosure is not limited to use with any particular type of well tool.

The wellbore 16 is lined with casing 18 and cement 20. In other examples, the wellbore 16 may be uncased or open hole, and/or inclined or deviated. The scope of this disclosure is not limited to use in any particular type of wellbore.

In other examples, the well tool 12 is not necessarily connected in a tubular string. Thus, it should be clearly understood that the scope of this disclosure is not limited to any of the details of the system 10 and method depicted in the drawings or described herein.

The well tool 12 includes one or more seals which preferably continue to seal after they have been exposed to relatively high downhole temperatures (e.g., over 300 deg. F, 149 deg. C). The seals can continue to seal, even after they have taken a "set" due to the elevated downhole temperatures.

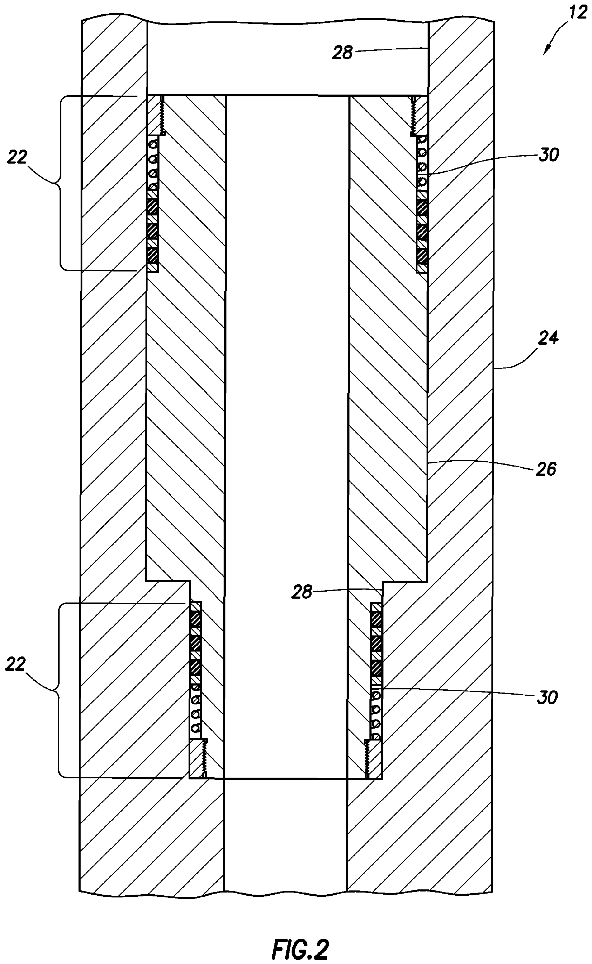

Referring additionally now to FIG. 2, an enlarged scale cross-sectional view of a portion of the well tool 12 is representatively illustrated. In this view, it may be seen that two sealing systems 22 are used to seal off an annular space between an outer housing 24 and an inner mandrel 26.

In this example, the sealing systems 22 are installed externally on the mandrel 26 and are received in seal bores or surfaces 28 in the outer housing 24. However, in other examples, the sealing systems 22 could be carried internally in the outer housing 24 for engagement with external seal surfaces 30 on the mandrel 26. Thus, the scope of this disclosure is not limited to any particular details of the well tool 12 described herein and/or depicted in the drawings.

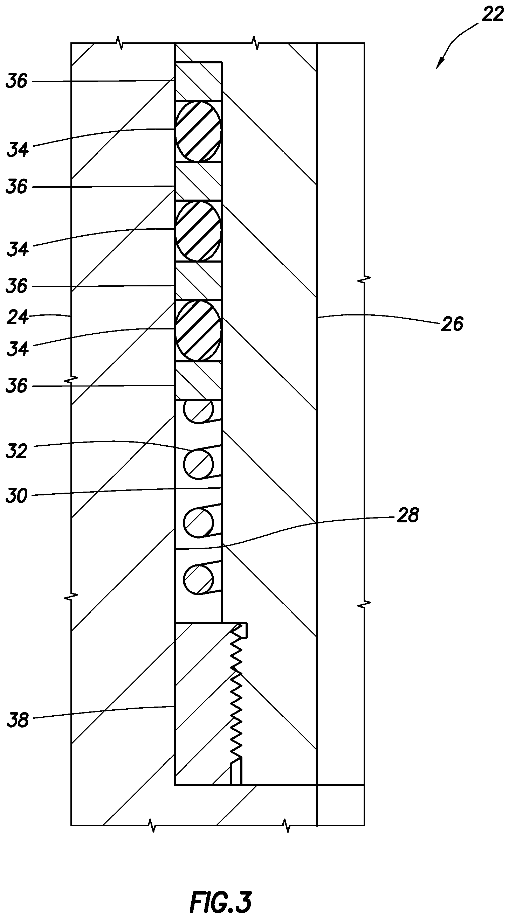

Referring additionally now to FIG. 3, an enlarged scale cross-sectional view of one of the sealing systems 22 is representatively illustrated. In this view, it may be seen that the sealing system 22 includes a spring 32 which applies a longitudinally compressive force to multiple annular seals 34 radially compressed between the seal surfaces 28, 30.

Anti-extrusion backup rings 36 are used to prevent extrusion of the seals 34 due to a pressure differential across the seals. Note that any number of springs 32 and anti-extrusion rings 36, and any plural number of seals 34 may be used, as desired.

A threaded ring 38 is threaded onto the mandrel 26, in order to longitudinally compress the spring 32. The compressive force applied longitudinally to the seals 34 by the spring 32 is increased before or after the seals are installed between the mandrel 26 and the outer housing 24.

In one installation method, the seals 34, anti-extrusion rings 36 and spring 32 can be positioned on the mandrel 26, and then the threaded ring 38 can be threaded onto the mandrel to compress the spring longitudinally between the threaded ring and an end one of the anti-extrusion rings. The sealing system 22 is then installed in the outer housing 24, so that the seals 34 sealingly engage the seal surface 28.

Alternatively, the seals 34, anti-extrusion rings 36 and spring 32 can be positioned on the mandrel 26, and then the mandrel (with the seals and anti-extrusion rings thereon) can be installed in the outer housing 24, so that the seals sealingly engage the seal surface 28. Then, the threaded ring 38 can be threaded onto the mandrel 26 to compress the spring 32 longitudinally between the threaded ring and an end one of the anti-extrusion rings 36.

The seals 34 (when initially installed) are dimensioned so that they are radially compressed between the seal surfaces 28, 30 whether or not the spring 32 exerts a longitudinal compressive force on the seals. The seals 34 have a radial thickness which is greater than a radial separation between the seal surfaces 28, 30. Thus, the seals 34 seal against the surfaces 28, 30, even if the spring 32 does not longitudinally compress the seals.

If the seals 34 lose their resiliency, however, (for example, due to exposure to elevated temperatures in a well) they can become "set" in a deformed configuration in which their relaxed radial thickness is not greater than the radial distance between the sealing surfaces 28, 30. In that case, the longitudinal compression of the seals 34 by the spring 32 will act to radially extend the seals into sealing engagement with the surfaces 28, 30.

The seals 34 are made of a resilient elastomeric material (such as nitrile, fluoro-elastomer, EPDM, etc.). Unfortunately, the resilience of such materials can be reduced due to exposure to elevated temperatures. The system 22 in effect compensates for this reduced resilience by longitudinally compressing the seals 34, so that they will extend radially inward and outward into sealing contact with the surfaces 28, 30.

Although the spring 32 is depicted in the drawings as being a single coiled spring, in other examples the spring could be replaced by wave springs, Belleville washers, or any other type of biasing device. The scope of this disclosure is not limited to use of any particular type of spring.

A sealing method is provided to the art by the above disclosure. In one example, the method includes installing at least one seal 34 in a well tool 12, the seal 34 being compressed radially as a result of the installing; and at least one spring 32 external to the seal 34 exerting a compressive force on the seal 34.

The seal 34 comprises a resilient material. The spring 32 may exert the compressive force on the seal 34 after a resilience of the material diminishes.

The compressive force is applied longitudinally to the seal 34 by the spring 32.

The seal 34 is made of an elastomeric material.

The method can include compressing the spring 32 prior to positioning the well tool 12 in a well.

The installing step includes positioning an anti-extrusion ring 36 between the seal 34 and the spring 32.

The spring 32 may comprise a coiled spring.

A well tool 12 is also described above. In one example, the well tool 12 comprises at least one seal 34 radially compressed between seal surfaces 28, 30 of the well tool 12, due to the seal 34 having a greater radial dimension as compared to a radial distance between the seal surfaces 28, 30; and at least one spring 32 which exerts a compressive force on the seal 34, the spring 32 being external to the seal 34.

Also provided to the art is a sealing system 22. In one example described above, the system 22 includes a plurality of annular seals 34 comprising a resilient material, and at least one spring 32 which applies a compressive force to the seals 34 as the resilience of the material diminishes, the spring 32 being external to the seal 34.

Although various examples have been described above, with each example having certain features, it should be understood that it is not necessary for a particular feature of one example to be used exclusively with that example. Instead, any of the features described above and/or depicted in the drawings can be combined with any of the examples, in addition to or in substitution for any of the other features of those examples. One example's features are not mutually exclusive to another example's features. Instead, the scope of this disclosure encompasses any combination of any of the features.

Although each example described above includes a certain combination of features, it should be understood that it is not necessary for all features of an example to be used. Instead, any of the features described above can be used, without any other particular feature or features also being used.

It should be understood that the various embodiments described herein may be utilized in various orientations, such as inclined, inverted, horizontal, vertical, etc., and in various configurations, without departing from the principles of this disclosure. The embodiments are described merely as examples of useful applications of the principles of the disclosure, which is not limited to any specific details of these embodiments.

In the above description of the representative examples, directional terms (such as "above," "below," "upper," "lower," etc.) are used for convenience in referring to the accompanying drawings. However, it should be clearly understood that the scope of this disclosure is not limited to any particular directions described herein.

The terms "including," "includes," "comprising," "comprises," and similar terms are used in a non-limiting sense in this specification. For example, if a system, method, apparatus, device, etc., is described as "including" a certain feature or element, the system, method, apparatus, device, etc., can include that feature or element, and can also include other features or elements. Similarly, the term "comprises" is considered to mean "comprises, but is not limited to."

Of course, a person skilled in the art would, upon a careful consideration of the above description of representative embodiments of the disclosure, readily appreciate that many modifications, additions, substitutions, deletions, and other changes may be made to the specific embodiments, and such changes are contemplated by the principles of this disclosure. For example, structures disclosed as being separately formed can, in other examples, be integrally formed and *vice versa.* Accordingly, the foregoing detailed description is to be clearly understood as being given by way of illustration and example only, the scope of the claimed invention being limited solely by the appended claims.

## Claims

1. A sealing method, comprising:
installing a plurality of resilient annular seals (34), made of an elastomeric material, between outer and inner seal surfaces (28, 30) in a well tool (12), wherein each one of the seals is interposed between, and is in direct contact with each ring (36) of a pair of anti-extrusion rings (36), the seals being compressed radially between the outer and inner seal surfaces as a result of the installing; and
at least one spring (32) external to the seals exerting a longitudinal compressive force on the seals to radially extend the seals into sealing engagement with the surfaces.

2. The method of claim 1, wherein the spring exerts the longitudinal compressive force on the seals after the resilience of the seals diminish.

3. The method of claim 1 or claim 2, wherein the elastomeric material comprises a nitrile, a fluoro-elastomer or an ethylene propylene diene monomer.

4. The method of any preceding claim, further comprising longitudinally compressing the spring prior to positioning the well tool in a well.

5. The method of any preceding claim, wherein the spring is a coiled spring.

6. The method of any preceding claim, wherein three resilient annular seals are provided, each one of which seals is interposed between a respective pair of the anti-extrusion rings.

7. A well tool, comprising:
a plurality of radially-compressed resilient annular seals (34), made of an elastomeric material, installed between outer and inner seal surfaces (28, 30) of the well tool (12), which compression is due to the seals, when initially installed, being dimensioned to have a greater radial dimension as compared to a radial distance between the outer and inner seal surfaces, such that the installed seals are radially compressed between the outer and inner seal surfaces, each one of the seals being interposed between, and in direct contact with each ring (36) of a pair of anti-extrusion rings (36); and
at least one spring (32) configured to exert a longitudinal compressive force on the seals to expand the seals radially, the spring being external to the seal.

8. The well tool of claim 7, wherein the system is configured such that the spring exerts the compressive force on the seal after a resilience of the material diminishes.

9. The well tool of claim 7 or claim 8, wherein the spring comprises a coiled spring.

10. The well tool of any of claims 7 to 9, wherein three resilient annular seals are provided, each one of which seals is interposed between a respective pair of the anti-extrusion rings.

## Patentansprüche

1. Dichtungsverfahren, das Folgendes umfasst:
Einbauen einer Vielzahl von flexiblen ringförmigen Dichtungen (34), die aus einem Elastomermaterial hergestellt sind, zwischen einer äußeren und einer inneren Dichtungsfläche (28, 30) in einem Bohrlochwerkzeug (12), wobei jede der Dichtungen zwischen jedem Ring (36) eines Paars von Anti-Extrusionsringen (36) eingesetzt ist und in direktem Kontakt damit steht, wobei die Dichtungen als ein Ergebnis des Einbauens radial zwischen der äußeren und der inneren Dichtungsfläche komprimiert sind; und
mindestens eine Feder (32) außerhalb der Dichtungen, die eine Längskompressionskraft auf die Dichtungen ausübt, um die Dichtungen radial in Dichtungseingriff mit den Flächen zu erstrecken.

2. Verfahren nach Anspruch 1, wobei die Feder die Längskompressionskraft auf die Dichtungen ausübt, nachdem die Widerstandsfähigkeit der Dichtungen abnimmt.

3. Verfahren nach Anspruch 1 oder Anspruch 2, wobei das Elastomermaterial ein Nitril, ein Fluor-Elastomer oder ein Ethylenpropylendien-Monomer umfasst.

4. Verfahren nach einem der vorhergehenden Ansprüche, das ferner eine Längskompression der Feder vor dem Positionieren des Bohrlochwerkzeugs in einem Bohrloch umfasst.

5. Verfahren nach einem der vorhergehenden Ansprüche, wobei die Feder eine gewickelte Feder ist.

6. Verfahren nach einem der vorhergehenden Ansprüche, wobei drei flexible ringförmige Dichtungen bereitgestellt sind, wobei jede dieser Dichtungen zwischen einem entsprechenden Paar der Anti-Extrusionsringe eingesetzt ist.

7. Bohrlochwerkzeug, das Folgendes umfasst:
eine Vielzahl von radial komprimierten flexiblen ringförmigen Dichtungen (34), die aus einem Elastomermaterial hergestellt sind, die zwischen einer äußeren und der inneren Dichtungsfläche (28, 30) des Bohrlochwerkzeugs (12) eingebaut sind, deren Kompression darauf zurückzuführen ist, dass die Dichtungen, wenn sie anfänglich eingebaut sind, dazu bemessen sind, im Vergleich zu einer radialen Entfernung zwischen der äußeren und der inneren Dichtungsfläche eine größere radiale Abmessung derart aufzuweisen, dass die eingebauten Dichtungen radial zwischen der äußeren und der inneren Dichtungsfläche komprimiert sind, wobei jede der Dichtungen zwischen jedem Ring (36) eines Paars von Anti-Extrusionsringen (36) eingesetzt ist und in direktem Kontakt damit steht; und
mindestens eine Feder (32), die dazu konfiguriert ist, eine Längskompressionskraft auf die Dichtungen auszuüben, um die Dichtungen radial auszudehnen, wobei die Feder außerhalb der Dichtung liegt.

8. Bohrlochwerkzeug nach Anspruch 7, wobei das System derart konfiguriert ist, dass die Feder die Kompressionskraft auf die Dichtung ausübt, nachdem eine Widerstandsfähigkeit des Materials abnimmt.

9. Bohrlochwerkzeug nach Anspruch 7 oder 8, wobei die Feder eine gewickelte Feder umfasst.

10. Bohrlochwerkzeug nach einem der Ansprüche 7 bis 9, wobei drei flexible ringförmige Dichtungen bereitgestellt sind, wobei jede der Dichtungen zwischen einem entsprechenden Paar von Anti-Extrusionsringen eingesetzt ist.

## Revendications

1. Procédé d'étanchéité, comprenant :
l'installation d'une pluralité de joints d'étanchéité annulaires élastiques (34), fabriqués à partir d'un matériau élastomère, entre les surfaces d'étanchéité externe et interne (28, 30) dans un outil de puits (12), dans lequel chacun des joints d'étanchéité est interposé entre, et est en contact direct avec chaque bague (36) d'une paire de bagues anti-extrusion (36), les joints d'étanchéité étant comprimés de manière radiale entre les surfaces d'étanchéité externe et interne à la suite de l'installation ; et
au moins un ressort (32) externe aux joints d'étanchéité exerçant une force de compression longitudinale sur les joints d'étanchéité pour étendre de manière radiale les joints d'étanchéité afin qu'ils soient en contact étanche avec les surfaces.

2. Procédé selon la revendication 1, dans lequel le ressort exerce la force de compression longitudinale sur les joints d'étanchéité après que l'élasticité des joints d'étanchéité a diminué.

3. Procédé selon la revendication 1 ou la revendication 2, dans lequel le matériau élastomère comprend un nitrile, un fluoroélastomère ou un monomère d'éthylène-propylène-diène.

4. Procédé selon une quelconque revendication précédente, comprenant en outre le fait de comprimer longitudinalement le ressort avant de positionner l'outil de puits dans un puits.

5. Procédé selon une quelconque revendication précédente, dans lequel le ressort est un ressort hélicoïdal.

6. Procédé selon une quelconque revendication précédente, dans lequel trois joints d'étanchéité annulaires élastiques sont prévus, chacun de ces joints d'étanchéité étant interposé entre une paire respective des bagues anti-extrusion.

7. Outil de puits, comprenant :
une pluralité de joints d'étanchéité annulaires élastiques comprimés de manière radiale (34), fabriqués à partir d'un matériau élastomère, installés entre les surfaces d'étanchéité externe et interne (28, 30) de l'outil de puits (12), laquelle compression est due aux joints d'étanchéité, lors de l'installation initiale, qui sont dimensionnés pour avoir une plus grande dimension radiale par rapport à une distance radiale entre les surfaces d'étanchéité externe et interne, de sorte que les joints d'étanchéité installés sont comprimés de manière radiale entre les surfaces d'étanchéité interne et externe, chacun des joints d'étanchéité étant interposé entre, et en contact direct avec chaque bague (36) d'une paire de bagues anti-extrusion (36) ; et
au moins un ressort (32) configuré pour exercer une force de compression longitudinale sur les joints d'étanchéité afin de dilater les joints d'étanchéité de manière radiale, le ressort étant externe au joint d'étanchéité.

8. Outil de puits selon la revendication 7, dans lequel le système est configuré de sorte que le ressort exerce la force de compression sur le joint d'étanchéité après que l'élasticité du matériau a diminué.

9. Outil de puits selon la revendication 7 ou la revendication 8, dans lequel le ressort comprend un ressort hélicoïdal.

10. Outil de puits selon l'une quelconque des revendications 7 à 9, dans lequel trois joints d'étanchéité annulaires élastiques sont prévus, chacun de ces joints d'étanchéité étant interposé entre une paire respective des bagues anti-extrusion.
